# EUROPEAN PATENT APPLICATION

(11) **EP 4 035 807 A1**
(43) Date of publication of application: **03.08.2022**
(21) Application number: 22152379.8
(22) Date of filing: 20.01.2022
(51) Int. Cl.: B22F 10/50, B08B 6/00, B33Y 40/00, B33Y 40/10

(54) **ELECTROSTATIC SEPARATION OF IMPURITIES DURING POWDER ADDITIVE MANUFACTURING**

(30) Priority: 30.01.2021 US 202117163390
(71) Applicant: The Boeing Company, Chicago, IL 60606-2016 (US)
(72) Inventor: COCO, Alexander J, Chicago, 60606-2016 (US); HEER, Bryan Thomas, Chicago, 60606-2016 (US)
(74) Representative: Boult Wade Tennant LLP

(57) **Abstract**

Apparatus and methods for removing impurities (102) from a powder bed (104). Examples include a powder bed (104) containing powder (106) usable in an additive manufacturing process, a recoater arm (110, 310) that traverses the powder bed (104) to distribute the powder (106), a collector element (202, 402) connected to the recoater arm (110, 310), and an electrostatic generator (204, 404) electrically connected to impart an electrostatic charge on at least the collector element (202, 402) and cause the impurities (102) in the powder (106) to adhere to the collector element (202, 402).

## Description

### BACKGROUND

Disclosed examples relate generally to electrostatic separation of impurities from a powder. More particularly, disclosed examples relate to electrostatic separation of impurities from a powder bed during additive manufacturing processes.

Many additive and other manufacturing processes utilize a supply of material that is processed into the part or parts being manufactured. For example, processes such as 3-D printing, directed energy deposition, material jetting, binder jetting, and powder bed fusion technologies, including but not limited to, direct metal laser sintering, selective laser sintering, selective heat sintering, electron beam melting, direct metal laser melting, and the like, can use supplies of powder or powder-like materials to manufacture various objects and component parts. The powders used may also vary depending upon the process, the part being made, and the like, and can include metal powders, thermoplastics, ceramics, composites, glasses, and the like.

Typically, and especially in the manufacture of aerospace vehicle components, the powders should remain free from impurities during the manufacturing process. It has been found by the present inventors that polymeric foreign material can be introduced into metallic powder from existing powder bed additive manufacturing systems during handling or the build process itself. Existing filtration methods and powder handling procedures typically limit the amount of impurities that get introduced into the fabrication material but prove ineffective in removing all impurities and are ineffective for impurities that are introduced during the fabrication process.

Existing additive manufacturing processes typically have multiple filtration systems integrated into the process to achieve an impurities-free fabrication ecosystem. The most prevalent method of eliminating impurities from the powder is by sieving the powder through a designated mesh screen sized to remove particulates other than the designated size. In other words, current filtration systems only filter by size, not material composition. Thus, impurities of similar size to the designated size, or smaller, are often missed.

Furthermore, most existing filtration systems are external machines outside of the additive manufacturing system and cannot filter material during the fabrication process when it is typically most critical. Other drawbacks, inefficiencies, and issues also exist with current systems and methods.

### SUMMARY

Accordingly, disclosed examples address the above, and other, issues with existing systems and methods. Disclosed examples include apparatus for removing impurities from a powder bed, the apparatus including a powder bed containing powder usable in an additive manufacturing process, a recoater arm that traverses the powder bed to distribute the powder, a collector element connected to the recoater arm, and an electrostatic generator electrically connected to impart an electrostatic charge on at least the collector element and cause the impurities in the powder to adhere to the collector element.

Further disclosed examples include a collection compartment adjacent to the collector element for collecting the impurities that adhere to the collector element. In still further disclosed examples, the apparatus can include a cleaning element that contacts at least a portion of the collector element and removes the impurities that adhere to the collector element and guides the removed impurities into the collection compartment.

In some disclosed examples the collector element may be a roller. In other disclosed examples, the collector element may be a plate.

In some disclosed examples the impurities may be polymer foreign material. In further disclosed examples the impurities are electrically non-conducting. In some disclosed examples the powder may be a metallic powder.

Also disclosed are methods of removing impurities from a powder in an additive manufacturing process, the methods include depositing a layer of the powder in a powder bed, spreading the powder in the powder bed with a recoater arm, charging a collector element with an electrostatic charge, and moving the charged collector element over the powder in the powder bed to attach the impurities in the powder to an outer surface of the charged collector element.

In further disclosed examples the methods include cleaning the impurities from the collector element as the collector element contacts a cleaning element. In still further disclosed examples the methods can include depositing the impurities in a collection compartment. In other disclosed examples the methods can include discharging the collector element at a predetermined location to release the impurities. In some disclosed examples the predetermined location is at an end of the powder bed. In other disclosed examples the predetermined location comprises two locations at opposite ends of the powder bed.

In some disclosed examples the methods can include moving the charged collector element proximate to an oppositely charged second collector element to remove the impurities from the charged collector element. In examples where the impurities are polymer foreign material, the methods can include charging the collector element to an amount sufficient to attach at least some of the polymer foreign material to the collector element.

Also disclosed are systems for additively manufacturing aerospace vehicle components, the systems including a powder additive manufacturing machine that includes a powder bed configured to contain a powder, a recoater arm that traverses the powder bed to distribute the powder, and an electrically non-conductive collector element connected to the recoater arm. The systems further include an electrostatic generator electrically connected to impart an electrostatic charge on at least the non-conductive collector element and cause impurities in the powder to adhere to the non-conductive collector element.

Further disclosed systems include a collection compartment in communication with the non-conductive collector element to collect the impurities that adhere to the non-conductive collector element. In some disclosed examples the systems include a cleaning element in contact with a portion of the non-conductive collector element that removes the impurities that adhere to the non-conductive collector element and guides the removed impurities into the collection compartment.

In some disclosed examples the non-conductive collector element may be a roller. In other disclosed examples the non-conductive collector element may be a plate. In some disclosed examples the impurities may be polymer foreign material.

Also disclosed are powder cleaning systems including a collector element configured to traverse a powder supply, and an electrostatic generator electrically connectable to the collector element to impart an electrostatic charge on the collector element and cause impurities in a powder in the powder supply to adhere to the collector element.

Further disclosed examples of powder cleaning systems include a cleaning element that contacts at least a portion of the collector element and removes the impurities that adhere to the collector element.

In some disclosed examples the collector element may be a roller. In other disclosed examples the collector element may be a plate. In some disclosed examples the powder in the powder supply may be a metallic powder. Other examples are also possible.

### BRIEF DESCRIPTION OF THE DRAWINGS

FIG. 1 is a schematic side view illustration of additive manufacturing apparatus for removing impurities from a powder bed.
FIG. 2 is a schematic side view illustration of another example of additive manufacturing apparatus for removing impurities from a powder bed.
FIGS. 3A and 3B are, respectively, top and side schematic views of powder cleaning systems.
FIG. 4 is a top-down schematic view of powder cleaning system.
FIG. 5 is a flowchart illustrating methods of removing impurities from a powder in an additive manufacturing process.

While the disclosure is susceptible to various modifications and alternative forms, specific examples have been shown in the drawings and will be described in detail herein. However, it should be understood that the disclosure is not intended to be limited to the particular forms disclosed. Rather, the intention is to cover all modifications, equivalents and alternatives falling within the scope of the appended claims.

### DETAILED DESCRIPTION

As will be apparent to those of ordinary skill in the art having the benefit of this disclosure, the disclose apparatus, systems, and methods have applicability in a wide array of industries, fields and circumstances. Of particular interest are industries, such as the manufacture of aerospace vehicles and their components where tolerances, specifications, and component reliability are highly important. As used herein, aerospace vehicles includes, but is not limited to, commercial aircraft, military aircraft, unmanned aircraft, spacecraft (manned and unmanned), satellites, drones, and the like.

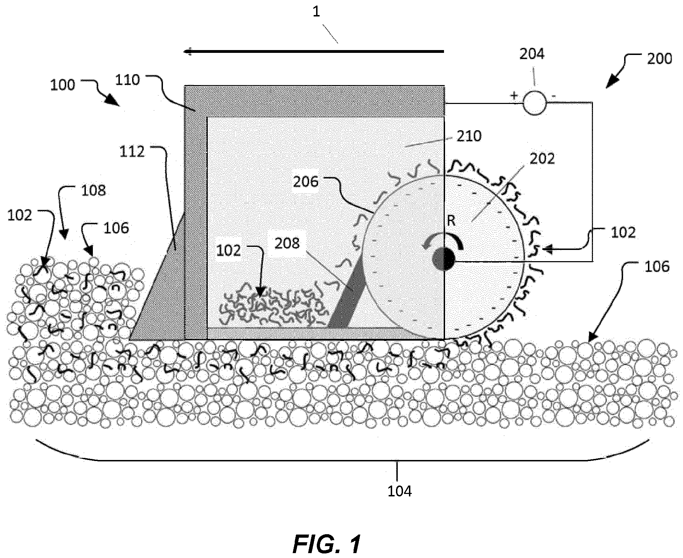

FIG. 1 is a schematic side view illustration of additive manufacturing apparatus 100 for removing impurities 102 from a powder bed 104 in accordance with disclosed examples. As disclosed herein, additive manufacturing systems and processes can include 3-D printing, directed energy deposition, material jetting, binder jetting, and powder bed fusion technologies, including but not limited to, direct metal laser sintering, selective laser sintering, selective heat sintering, electron beam melting, direct metal laser melting, and the like, can use supplies of powder or powder-like materials to manufacture various objects and component parts. The powders used may also vary depending upon the process, the part being made, and the like, and can include metal powders, thermoplastics, ceramics, composites, glasses, and the like. FIG. 1 schematically illustrates a powder bed 104 containing powder 106 to be used in an additive manufacturing process. As also indicated schematically powder bed 104 may contain impurities 102. As also indicated powder bed 104 may contain regions or areas of contaminated powder 108 with impurities 102 mixed together with the powder 106.

As also shown in FIG.1 additive manufacturing apparatus 100 may include a recoater arm 110 that traverses the powder bed 104 to, among other things, redistribute the powder 106. As shown schematically in FIG. 1 recoater arm 110 is moving in the direction of arrow 1. Depending upon the type of additive manufacturing process, apparatus 100 used, powder 106 used, object being manufactured, and the like, recoater arm 110 may distribute powder 106 at various times, and in various directions, during the manufacturing process. Some examples of recoater arm 110 may include a blade 112, or the like, to assist in the powder 106 distribution process.

As also shown in FIG. 1 additive manufacturing apparatus 100 includes a powder cleaning system 200 to remove the impurities 102 from the powder bed 104. Examples of powder cleaning system 200 include a collector element 202 which, in some examples, may take the form of a roller or the like to assist the recoater arm 110 in powder 106 distribution processes. Collector element 202 may take other shapes, may not contact the powder bed 104, and may be located on other portions of additive manufacturing apparatus 100 besides the recoater arm 110 as would be apparent to those of ordinary skill in the art having the benefit of this disclosure. Examples of collector element 202 are formed from dielectric or non-electrically conducting materials.

Powder cleaning system 200 also includes an electrostatic generator 204, which may be any type of electrostatic charge generator such as a Van de Graaf generator, a Wimshurst machine, a Bonetti machine, suitable circuitry for generating an electrostatic charge, or the like. As indicated schematically electrostatic generator 204 is electrically connected to impart a charge (shown schematically as a negative charge in FIG. 1 but need not be) to an outer edge or surface 206 of the collector element 202. The charge on the outer surface 206 attracts the impurities 102 out of the powder bed 104 and adheres them to the collector element 202. For examples of powder cleaning system 200 where collector element 202 is a roller, or the like, collector element 202 may rotate (as indicated by arrow R in FIG. 1) to remove impurities 102 and deposit them in a collection compartment 210.

FIG. 1 illustrates examples where collection compartment 210 may be a chamber or the like integrated into recoater arm 110, but other configurations and locations for collection compartment 210 are also possible as disclosed herein. Additionally, examples of powder cleaning system 200 may include a cleaning element 208, such as a wiper or blade, to assist in the removal and guiding of impurities 102 into collection compartment 210. In other examples electrostatic generator 204 may be switched, or otherwise pulsed, to discharge and deposit impurities into collection compartment 210. In any event the cleaned collector element 202 may continue to collect impurities 102 throughout a recoating process or for any other desired duration.

As would also be understood by persons of ordinary skill in the art having the benefit of this disclosure, the disclosed systems, apparatus, and methods allow impurities 102 to be collected during, or before, a build process and may be collected independent of impurity 102 size. Impurities 102 that are electrically non-conducting, such as polymer foreign material, or the like, may be collected in accordance with disclosed examples.

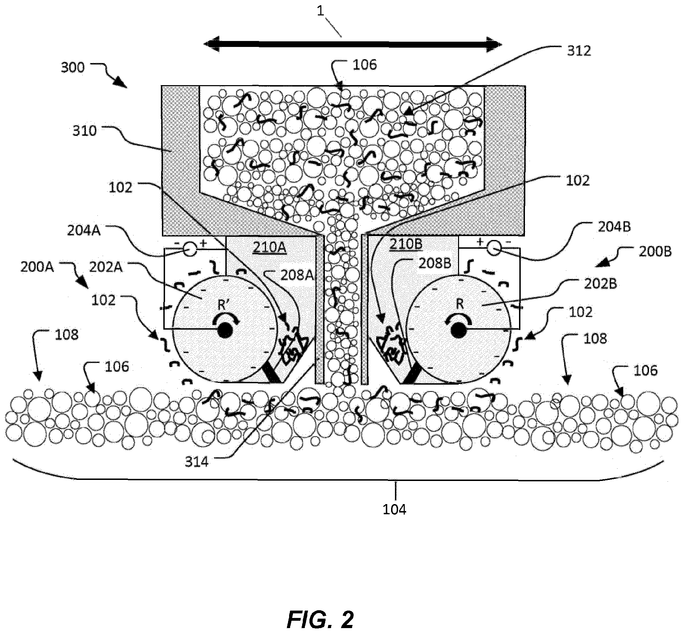

FIG. 2 is a schematic side view illustration of another example of additive manufacturing apparatus 300 for removing impurities 102 from a powder bed 104 in accordance with disclosed examples. As shown, some examples of additive manufacturing apparatus 300 may include a powder reservoir 312, or the like, as a component of the recoater arm 310. Powder 106 in the powder reservoir 312 may be distributed onto a powder bed 104 through a recoater slot 314 or similar aperture in the recoater arm 310.

As indicated by direction of travel arrow 1 the recoater arm 310 may move bidirectionally, or in other patterns, across the powder bed 104. Thus, it may be advantageous to include more than one powder cleaning systems 200A, 200B to remove impurities 102 along each direction of travel.

In these examples each powder cleaning system 200A, 200B includes a collector element 202A, 202B (shown schematically as rollers rotating in directions indicated by arrows R, R'), an electrostatic generator 204A, 204B, a collection compartment 210A, 210B, and a cleaning element 208A, 208B. Other configurations are also possible.

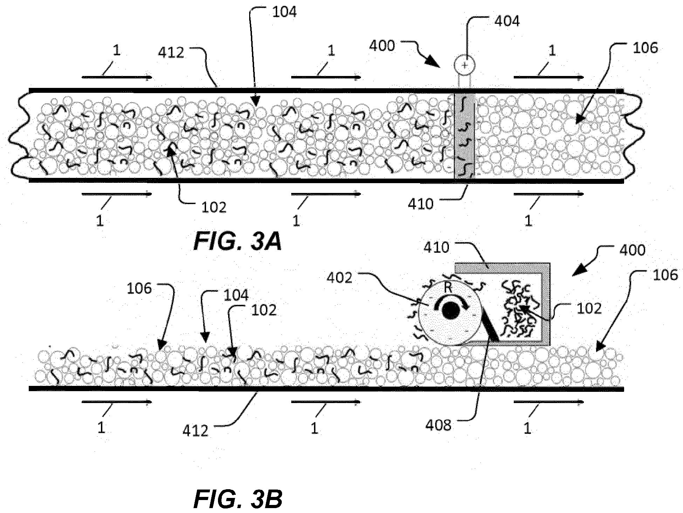

FIGS. 3A and 3B are, respectively, top and side schematic views of powder cleaning systems 400 in accordance with disclosed examples. In these examples the cleaning system 400 is fixed at a specified location and powder bed 104 moves past on a conveyor 412 in the direction indicated by direction arrows 1. Conveyor 412 may be a moving belt, or the like, or may be a channel or chute that moves the powder bed 104 using gravity (e.g., incline), fluid flow, or the like.

As discussed with other examples collector element 402 (again shown as a roller rotating in the direction of arrow R) is charged by electrostatic generator 404 to remove impurities 102 from the powder bed 104. A cleaning element 408 may be used to remove impurities 102 from the collector element 402 and deposit the impurities 102 into a collection compartment 410.

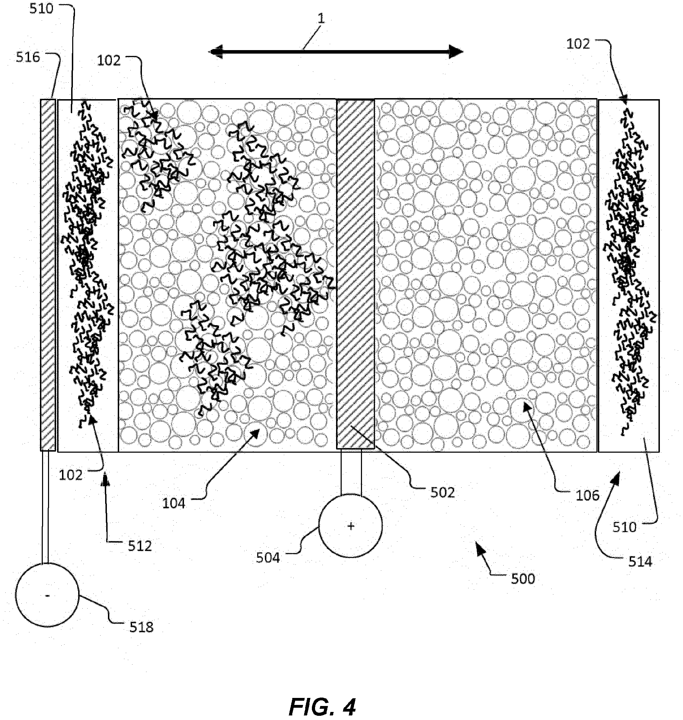

FIG. 4 is a top-down schematic view of powder cleaning system 500 in accordance with disclosed examples. In these examples collector element 502 may be a bar or plate that traverses a powder bed 104 bidirectionally (as indicated by direction arrow 1) or otherwise. As in other disclosed examples an electrostatic generator 504 charges the collector element 502 to a level sufficient to attract impurities 102 out of the powder bed 104. Collection compartments 510 may be at either end of the powder bed 104 or in other predetermined locations. After traversing the powder bed 104 and when positioned over a collection compartment 510 the collector element 502 may be discharged to deposit the impurities 102 into the collection compartment 510, a second oppositely charged collector element 516 (charged by electrostatic generator 518) may be used to remove the impurities 102, or the impurities 102 may be otherwise removed to the collection compartment 510. As shown a collection compartment 510 may be located at each end 512, 514 of the powder bed 104. Other configurations are also possible. As will be apparent to those of ordinary skill in the art having the benefit of this disclosure, examples, such as powder cleaning system 500, are non-contact examples meaning that the collector element 502 does not contact the powder 106 in powder bed 104 which may be advantageous in some additive manufacturing applications.

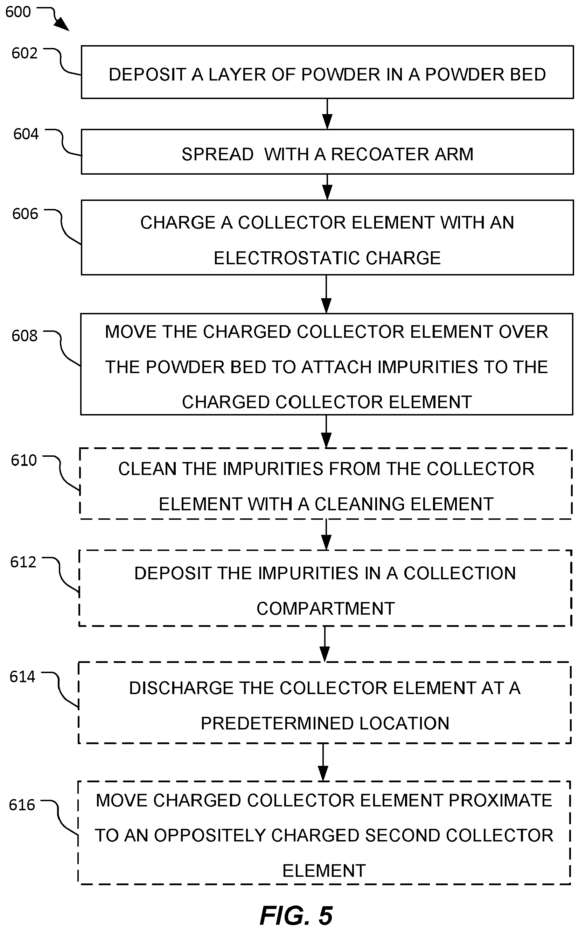

FIG. 5 is a flowchart illustrating methods 600 of removing impurities 102 from a powder 106 in an additive manufacturing process. While the disclosed steps are shown linearly and sequentially in FIG. 5, persons of ordinary skill in the art having the benefit of this disclosure would understand that they need not be performed in the order shown, in the same sequence, or for every example and are exemplary steps. Disclosed examples include at 602 depositing a layer of powder (e.g., 106) in a powder bed (e.g., 104). At 604 spreading the powder in the powder bed, for example, with a recoater arm (e.g., 110, 310). At 606 charging a collector element (e.g., 202, 402, 502) with an electrostatic charge. At 608 moving the charged collector element over the powder in the powder bed to attach the impurities (e.g., 102) in the powder to an outer surface (e.g., 206) of the charged collector element.

Examples of the methods can also optionally include at 610 cleaning the impurities from the collector element as the collector element contacts a cleaning element (e.g., 208, 408). Examples can also optionally include at 612 depositing the impurities in a collection compartment (e.g., 210, 410, 510).

Examples of the methods can also optionally include at 614 discharging the collector element at a predetermined location (e.g., 512, 514) to release the impurities. As disclosed herein the predetermined locations may be at the ends of a powder bed, may be more the one location, or the like.

Examples of the methods can also optionally include at 616 moving the charged collector element proximate to an oppositely charged second collector element (e.g., 516) to remove the impurities from the charged collector element.

Examples of the methods can also optionally include moving the charged collector element proximate to an oppositely charged second collector element (e.g., 516) to remove the impurities from the charged collector element. As disclosed herein for methods where the impurities comprise polymer foreign material the collector element may be charged to an amount sufficient to attach at least some of the polymer foreign material to the collector element. Other methods, sequences of steps, combinations of steps, and the like are also possible.

Further illustrative and non-exclusive examples according to the disclosure are described in the following paragraphs:
An apparatus (100, 300, 400, 500) for removing impurities (102) from a powder bed (104), the apparatus comprising: a powder bed containing powder (106) usable in an additive manufacturing process; a recoater arm (110, 310) that traverses the powder bed to distribute the powder; a collector element (202, 402) connected to the recoater arm; and an electrostatic generator (204, 404) electrically connected to impart an electrostatic charge on at least the collector element and cause the impurities in the powder to adhere to the collector element.

The apparatus of the preceding paragraph, further comprising a collection compartment (210, 410) adjacent to the collector element for collecting the impurities that adhere to the collector element.

The apparatus of either of the preceding paragraphs, further comprising a cleaning element (208, 408) that contacts at least a portion of the collector element and removes the impurities that adhere to the collector element and guides the removed impurities into the collection compartment.

The apparatus of any of the three preceding paragraphs, wherein the collector element comprises one of a roller (202) and a plate (502).

The apparatus of any of the four preceding paragraphs, wherein the impurities comprise at least one of: polymer foreign material; and electrically non-conducting material.

The apparatus of any of the five preceding paragraphs, wherein the powder comprises a metallic powder.

The apparatus of any of the six preceding paragraphs, wherein the powder comprises at least one of thermoplastics, ceramics, composites, and glasses.

A method (600) of removing impurities (102) from a powder (106) in an additive manufacturing process, the method comprising: depositing (602) a layer of the powder in a powder bed (104); spreading (604) the powder in the powder bed with a recoater arm (110, 310); charging (606) a collector element (202, 402) with an electrostatic charge; and moving (608) the charged collector element over the powder in the powder bed to attach the impurities in the powder to an outer surface of the charged collector element.

The method of the preceding paragraph, further comprising: cleaning (610) the impurities from the collector element as the collector element contacts a cleaning element (208, 408).

The method of either of the two preceding paragraphs, further comprising: depositing (612) the impurities in a collection compartment (210, 410, 510).

The method of any of the three preceding paragraphs, further comprising: discharging (614) the collector element at a predetermined location (512, 514) to release the impurities.

The method of any of the four preceding paragraphs, wherein the predetermined location is at an end (512, 514) of the powder bed.

The method of any of the five preceding paragraphs, wherein the predetermined location comprises two locations (512, 514) at opposite ends of the powder bed.

The method of any of the six preceding paragraphs, further comprising: moving (616) the charged collector element proximate to an oppositely charged second collector element (516) to remove the impurities from the charged collector element.

The method of any of the seven preceding paragraphs, wherein the impurities comprise polymer foreign material and the method further comprises: charging the collector element to an amount sufficient to attach at least some of the polymer foreign material to the collector element.

A system for additively manufacturing aerospace vehicle components, the system comprising: a powder additive manufacturing machine (100, 300) comprising: a powder bed (104) configured to contain a powder (106); a recoater arm (110, 310) that traverses the powder bed to distribute the powder; and an electrically non-conductive collector element (202) connected to the recoater arm; and an electrostatic generator (204) electrically connected to impart an electrostatic charge on at least the non-conductive collector element and cause impurities (102) in the powder to adhere to the non-conductive collector element.

The system of the preceding paragraph, further comprising a collection compartment (210) in communication with the non-conductive collector element to collect the impurities that adhere to the non-conductive collector element.

The system of either of the two preceding paragraphs, further comprising: a cleaning element (208) in contact with a portion of the non-conductive collector element and that removes the impurities that adhere to the non-conductive collector element and guides the removed impurities into the collection compartment.

The system of any of the three preceding paragraphs, wherein the non-conductive collector element comprises one of a roller (202) and a plate (502).

The system of any of the four preceding paragraphs, wherein the impurities comprise at least one of: polymer foreign material; and electrically non-conducting material.

The system of any of the five preceding paragraphs, wherein the powder comprises at least one of metal powders, thermoplastics, ceramics, composites, and glasses.

Although various examples have been shown and described, the present disclosure is not so limited and will be understood to include all such modifications and variations are would be apparent to one skilled in the art.

## Claims

1. An apparatus (100, 300, 400, 500) for removing impurities (102) from a powder bed (104), the apparatus comprising:
a powder bed containing powder (106) usable in an additive manufacturing process;
a recoater arm (110, 310) that traverses the powder bed to distribute the powder;
a collector element (202, 402) connected to the recoater arm; and
an electrostatic generator (204, 404) electrically connected to impart an electrostatic charge on at least the collector element and cause the impurities in the powder to adhere to the collector element.

2. The apparatus of claim 1 further comprising:
a collection compartment (210, 410) adjacent to the collector element for collecting the impurities that adhere to the collector element.

3. The apparatus of claim 2 further comprising:
a cleaning element (208, 408) that contacts at least a portion of the collector element and removes the impurities that adhere to the collector element and guides the removed impurities into the collection compartment.

4. The apparatus of one of claims 1-3 wherein the collector element comprises a roller (202) and/or a plate (502).

5. The apparatus of one of claims 1-4 wherein the impurities comprise at least one of:
polymer foreign material; and
electrically non-conducting material.

6. The apparatus of one of claims 1-5 wherein the powder comprises a metallic powder and/or at least one of thermoplastics, ceramics, composites, and glasses.

7. A powder additive manufacturing machine (100, 300) comprising the apparatus of any one of claims 1-6.

8. A method (600) of removing impurities (102) from a powder (106) in an additive manufacturing process, the method comprising:
depositing (602) a layer of the powder in a powder bed (104);
spreading (604) the powder in the powder bed with a recoater arm (110, 310);
charging (606) a collector element (202, 402) with an electrostatic charge; and
moving (608) the charged collector element over the powder in the powder bed to attach the impurities in the powder to an outer surface of the charged collector element.

9. The method of claim 8 further comprising:
cleaning (610) the impurities from the collector element as the collector element contacts a cleaning element (208, 408).

10. The method of claim 9 further comprising:
depositing (612) the impurities in a collection compartment (210, 410, 510).

11. The method of one of claims 8-10 further comprising:
discharging (614) the collector element at a predetermined location (512, 514) to release the impurities.

12. The method of claim 11 wherein the predetermined location is at an end (512, 514) of the powder bed.

13. The method of claim 11 wherein the predetermined location comprises two locations (512, 514) at opposite ends of the powder bed.

14. The method of one of claims 8-13 further comprising:
moving (616) the charged collector element proximate to an oppositely charged second collector element (516) to remove the impurities from the charged collector element.

15. The method of one of claims 8-14 wherein the impurities comprise polymer foreign material and the method further comprises:
charging the collector element to an amount sufficient to attach at least some of the polymer foreign material to the collector element.
